# FASCICULE DE BREVET EUROPEEN

(11) **EP 2 024 798 B1**
(45) Date de publication et mention de la délivrance du brevet: **10.01.2018**
(21) Numéro de dépôt: 07766044.7
(22) Date de dépôt: 14.05.2007
(51) Int. Cl.: G06F 21/57

(54) **PROCÉDÉ ET DISPOSITIF DE CONFIGURATION SÉCURISÉE D'UN TERMINAL AU MOYEN D'UN DISPOSITIF DE STOCKAGE DE DONNÉES DE DÉMARRAGE**
VERFAHREN UND VORRICHTUNG ZUR GESICHERTEN KONFIGURATION EINES ENDGERÄTS MITTELS EINER SPEICHERVORRICHTUNG FÜR BOOT-DATEN
SECURE TERMINAL CONFIGURATION METHOD AND DEVICE BY MEANS OF A BOOT DATA STORAGE DEVICE

(30) Priorité: 15.05.2006 FR 0651733
(43) Date de publication de la demande: 18.02.2009
(73) Titulaire: Orange, 75015 Paris (FR)
(72) Inventeur: CHARLES, Olivier, 92140 Clamart (FR); LECLERCQ, Eric, 1000 Bruxelles (BE); MAUPETIT, Matthieu, 75015 Paris (FR)
(74) Mandataire: Regimbeau
(86) Numéro de dépôt international: PCT/FR2007/051268
(87) Numéro de publication internationale: WO 2007/132122

(56) Documents cités:
- WO-A-01/42889
- WO-A-93/17388
- WO-A-03/009115
- US-A1- 2005 138 414

## Description

L'invention concerne le domaine des télécommunications et de l'informatique. Elle concerne plus précisément un procédé et un dispositif de configuration sécurisée d'un terminal au moyen d'un dispositif de stockage de données de démarrage.

L'invention décrite ici s'applique aux dispositifs, généralement amovibles, permettant le stockage, et donc le transport, de données de démarrage et de configuration de terminal. Il s'agit notamment de dispositifs de stockage que l'on connecte à un ordinateur et qui contiennent toutes les données nécessaires au démarrage et à la configuration logicielle de l'ordinateur: système d'exploitation, programmes de l'utilisateur, données de l'utilisateur, etc.

Un tel dispositif de stockage est par exemple une clef USB (Universal Serial Bus) pouvant être connectée au port USB d'un ordinateur personnel. Dans la mémoire d'une telle clef, il est possible de stocker un système d'exploitation complet dans un format tel que, au redémarrage de l'ordinateur, c'est ce système d'exploitation qui sera lancé. Par conséquent, lorsque qu'un tel dispositif est connecté sur un port USB d'un ordinateur personnel et qu'un utilisateur démarre cet ordinateur, le système de base d'entrée/sortie du terminal (BIOS, Basic Input/Output System) détecte la présence d'un tel dispositif sur le port USB et charge les programmes qui y sont stockés, ce qui déclenche notamment le démarrage du système d'exploitation stocké.

Dans cette procédure de démarrage, les logiciels initialement installés sur le disque dur de l'ordinateur ne seront pas sollicités, seuls le seront les logiciels stockés dans la mémoire du dispositif amovible. Un tel dispositif permet d'utiliser n'importe quel ordinateur sans utiliser les programmes qui sont stockés dans le disque dur de cet ordinateur, et donc sans avoir à craindre la présence de programmes infectés ou défectueux qui peuvent s'y trouver.

Il est connu du document de brevet publié sous le numéro WO 93/17388 une méthode de protection d'un ordinateur utilisant comme dispositif de démarrage une carte à puce de type "smart card" à accès sécurisé. D'autres techniques de démarrage d'un ordinateur sont décrites dans les documents WO 01/42889, US 2005/138414 et WO 03/009115.

Cependant compte tenu du niveau de sécurité attendu pour ces dispositifs amovibles, il est difficile de faire évoluer de façon sécurisée le contenu du dispositif du terminal. L'utilisateur n'est donc pas en mesure de faire évoluer la configuration logicielle utilisée. En outre, un tel dispositif amovible est susceptible d'être piraté s'il est subtilisé par un pirate et que les logiciels qui y sont stockés sont modifiables.

Sauf à reformater le dispositif de stockage de données, il n'existe pas de solution permettant à la fois la configuration sécurisée du terminal à partir d'un dispositif de stockage de données de démarrage non falsifiable et la mise à jour sécurisée de cette configuration ou de ce dispositif. L'invention propose une solution à ce problème.

L'invention a pour objet un procédé selon la revendication 1.

Le procédé permet le démarrage du terminal avec environnement logiciel d'exécution du système d'exploitation, notamment le noyau du système d'exploitation, garanti sûr et non falsifié. Cet environnement sécurisé permet d'envisager un processus de mise à jour également sécurisé.

Les données de l'utilisateur, qu'il s'agisse de programmes ou fichiers de données, sont rendues accessibles de manière sécurisée, puisque l'arborescence de fichier est construite dans l'environnement du système d'exploitation chargé de manière sécurisée. En outre, cette arborescence étant construite en mémoire vive, donc sans interaction avec les autres supports d'enregistrement du terminal tels que disques dur, aucune contamination des données de ne peut être effectuée au moyen d'un virus ou d'un autre programme pirate résidant dans le terminal.

Selon un mode de réalisation particulier, l'initialisation dudit terminal déclenche en outre une étape de construction en mémoire vive dudit terminal d'une deuxième structure logique de fichiers à partir de données contenues dans un troisième fichier stocké dans une troisième zone mémoire desdits moyens de stockage, ladite étape de construction étant destinée à n'être déclenchée qu'en cas de validité d'une signature numérique dudit deuxième fichier.

L'accès par l'utilisateur aux fichiers stockés dans la troisième zone mémoire se fait à travers une autre structure logique, par exemple sous forme d'arborescence, construite à partir d'un fichier signé. Ainsi, non seulement les données de l'utilisateur mais aussi l'environnement du système d'exploitation est rendu accessible à l'utilisateur de manière sûre.

Selon un mode de réalisation particulier, une étape de vérification de la signature numérique du premier fichier est exécutée au moyen d'une donnée de vérification de signature numérique stockée dans une zone mémoire desdits moyens de stockage dont l'accès en écriture est sécurisé. Ceci garanti qu'un pirate ne peut falsifier les données qui sont stockées dans cette zone sécurisée, la zone mémoire n'étant pas modifiable ou uniquement au moyen d'un code d'autorisation d'accès.

Selon un mode de réalisation particulier, l'initialisation dudit terminal déclenche en outre,
- une étape d'obtention d'au moins un quatrième fichier de données, ledit quatrième fichier étant chiffré numériquement,
- une étape de construction en mémoire vive dudit terminal d'une troisième structure logique de fichiers à partir de données contenues dans ledit au moins un quatrième fichier.

Le quatrième fichier permet une mise à jour incrémentale de la configuration du terminal.

Ce fichier peut être obtenu de différentes manières. Selon une première alternative, le quatrième fichier est obtenu par lecture d'une quatrième zone mémoire desdits moyens de stockage. Selon une deuxième alternative, le quatrième fichier est obtenu par téléchargement à partir d'un serveur de données en liaison de communication avec ledit terminal.

De préférence, au moins une des étapes de construction est exécutée conditionnellement à la fourniture d'une donnée valide d'authentification d'un utilisateur. Ainsi seul un utilisateur disposant d'une donnée valide d'authentification peut accéder aux fichiers de cette deuxième structure logique.

Selon ce principe, un utilisateur ne pourra accéder qu'aux données des fichiers pour lesquels il dispose d'une donnée d'authentification valide. Les données stockées dans les différents fichiers présentes dans les moyens de stockage peuvent ainsi être rendus accessibles sélectivement à des utilisateurs différents selon le fichier concerné, alors que les données permettant le démarrage du système d'exploitation pourront être rendus accessibles à tous les utilisateurs dès lors qu'aucune donnée d'authentification n'est requise pour ce faire.

Les différentes structures logiques de fichiers construites à partir des différents fichiers sont de préférence vues par l'utilisateur sous la forme d'une unique structure logique, dans laquelle l'utilisateur va pouvoir naviguer comme s'il s'agissait d'une partition d'un disque dur.

Selon un mode de réalisation particulier, l'initialisation dudit terminal déclenche en outre une étape de déchiffrement d'au moins un bloc de données dudit deuxième respectivement quatrième fichier, ladite étape de déchiffrement étant exécutée suite à une demande d'accès en lecture à un fichier de ladite première respectivement troisième structure logique, la clef de déchiffrement utilisée dans l'étape de déchiffrement étant obtenue conditionnellement à la fourniture d'une donnée valide d'authentification d'un utilisateur. Les accès en écriture à la structure de données sont donc sécurisés: seul un utilisateur accrédité peut modifier la structure de données. Cette structure de données étant intègre par construction, elle reste intègre suite aux modifications.

Corrélativement, l'invention a également pour objet un dispositif de configuration d'un terminal selon la revendication 9.

Les avantages énoncés pour le procédé selon l'invention sont transposables au dispositif selon l'invention et à ses différents modes de réalisation.

D'autres buts, caractéristiques et avantages de l'invention apparaîtront à travers la description qui va suivre, donnée uniquement à titre d'exemple non limitatif, et faite par référence aux dessins annexés sur lesquels:
- la figure 1a représente un premier mode de réalisation d'un système incorporant le dispositif selon l'invention et permettant la configuration d'un terminal;
- la figure 1b représente un deuxième mode de réalisation d'un système incorporant le dispositif selon l'invention et permettant la configuration d'un terminal;
- la figure 2a représente schématiquement une première configuration d'une mémoire utilisée dans l'invention;
- la figure 2b représente schématiquement une deuxième configuration d'une mémoire utilisée dans l'invention;
- la figure 3 représente un organigramme d'un procédé de mise à jour de la configuration d'un terminal et d'un dispositif de stockage;
- la figure 4 représente un organigramme du procédé de configuration de terminal à partir d'un dispositif de stockage.

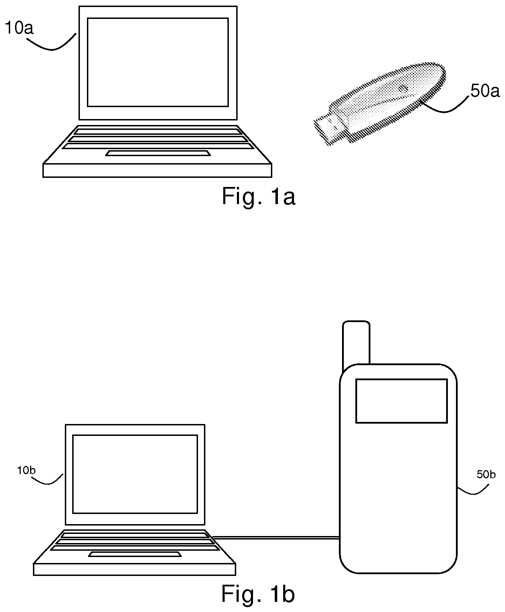

La figure 1a illustre un premier mode de réalisation d'un système incorporant le dispositif selon l'invention et permettant la configuration d'un terminal. Le système représenté à la figure 1a comprend:
- un terminal 10a;
- une clef USB 50a comprenant des moyens de stockage de données sous forme de mémoire, et optionnellement, une carte à puce.

Le terminal 10a est typiquement un ordinateur personnel, disposant au moins d'une unité centrale de traitement de données, un clavier, un écran, et d'un bus de communication pour l'interconnexion de périphériques à l'unité centrale, par exemple d'un bus série répondant à la norme USB (Universal Serial Bus). Il n'est pas indispensable que le terminal dispose d'un disque dur, dans la mesure où, celui-ci n'est pas utilisé pour la mise en oeuvre de l'invention. Le terminal 10a comprend en outre au moins un port USB pour le raccordement de la clef USB.

Le terminal 10a comprend en outre une mémoire dans laquelle est stocké le programme BIOS (Basic Input/Output System) ou système de base d'entrée/sortie, programme bas niveau permettant la détection, lors du démarrage du terminal 10, des périphériques connectés au terminal 10, ainsi que le démarrage du système d'exploitation.

La figure 1b illustre un deuxième mode de réalisation d'un système incorporant le dispositif selon l'invention et permettant la configuration d'un terminal. Le dispositif représenté à la figure 1b comprend:
- un terminal 10b;
- une terminal de télécommunication 50b comprenant une carte à puce et des moyens de stockage de données sous forme de mémoire.

Le terminal 10b est identique au terminal 10a décrit pour la figure 1. Le terminal 50b dispose d'un port USB permettant d'établir une liaison de communication avec le terminal 10b. Ce terminal 50b est réalisé par exemple sous la forme d'un téléphone mobile ou d'un assistant personnel (PDA, Personnal Data Assistant).

En connectant le téléphone mobile 50b au terminal 10b par l'intermédiaire d'un câble USB, trois modules périphériques sont alors accessibles par le terminal 10 via le même port USB :
- la mémoire du terminal 50b, vue comme une mémoire de clé USB classique,
- le module d'accès au réseau du terminal 50b, qui est en fait le modem d'accès au réseau du téléphone mobile,
- une carte à puce du terminal 50b, qui est en fait la carte SIM (Suscriber Identity Module) du module d'accès au réseau.

Dans ce deuxième mode de réalisation, le téléphone 50b est vu par le terminal 10 soit comme une carte réseau, soit comme un modem. En ce qui concerne l'utilisation de la carte SIM du module d'accès réseau comme carte à puce, on utilise de préférence pour le terminal 10b un pilote virtuel tel que celui décrit dans le document de brevet publié sous le numéro WO2005/036822. Un tel pilote est susceptible d'être utilisé aussi bien avec une liaison filaire qu'avec une liaison non filaire entre le terminal 10b et le terminal 50b. De la sorte, le terminal pourra accéder à la carte SIM comme s'il s'agissait d'une carte à puce insérée dans un lecteur local de carte à puce, et donc en faisant abstraction du lien USB et des contraintes d'accès liées à l'intégration de la carte SIM dans l'environnement du terminal mobile.

Selon le même principe, un pilote virtuel est utilisable également pour le pilotage du module d'accès réseau, de manière à ce que les programmes d'accès au réseau fonctionnent de la même manière que si le module d'accès au réseau était un module installé localement dans le terminal 10b.

La suite de la description se réfère aussi bien au premier mode de réalisation qu'au deuxième mode de réalisation.

La clef USB 50a ou le terminal de télécommunication 50b constitue chacun un dispositif mobile et amovible, comprenant des moyens de stockage de données.

Les dispositifs amovibles de stockage usuellement utilisés pour le démarrage et la configuration de terminaux (disque dur de démarrage, etc...) comprenne une mémoire de stockage partagée usuellement en deux zones : une zone système et zone utilisateur.

La zone système comprend un fichier qui contient une image du système d'exploitation. Elle contient en outre dans ses premiers octets un programme d'amorçage (appelé également programme de boot, ou "bootstrap" selon la terminologie anglaise), déclenché par le BIOS et chargé de démarrer le système d'exploitation.

La zone utilisateur est elle destinée à héberger les fichiers personnels de l'utilisateur: fichiers de configuration, documents de travail, etc.

L'invention repose sur un nouveau mode de découpage de la mémoire servant à la configuration d'un terminal.

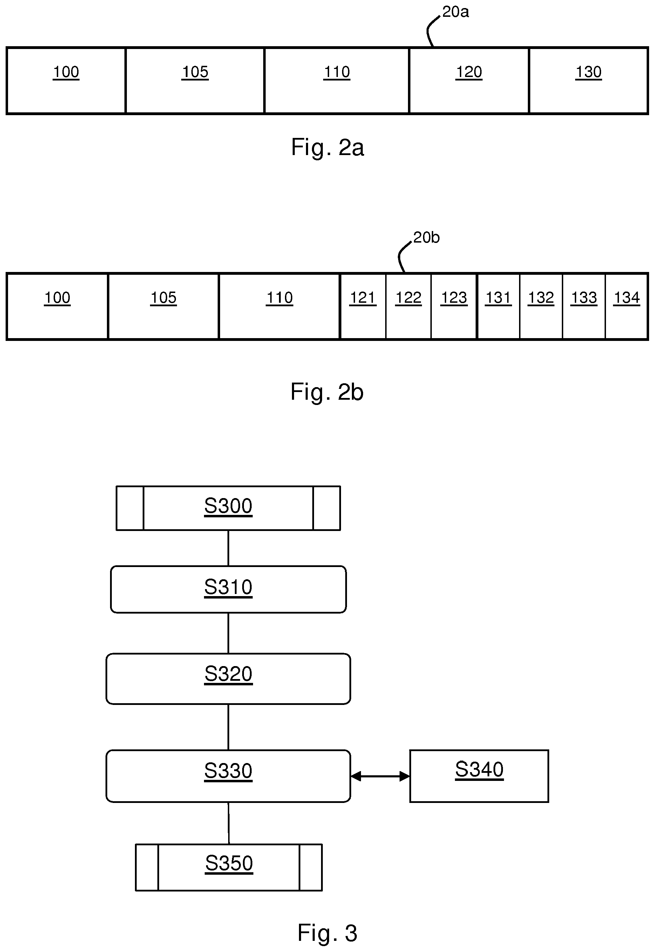

La figure 2a illustre un mode de réalisation d'une mémoire 20a selon l'invention. Cette mémoire est divisée en cinq zones de données 100, 105, 110, 120, 130. L'ensemble de ces zones correspond à une partition de la mémoire 20a.

La première zone 100 est appelée *zone de démarrage.* Cette zone de la mémoire contient un programme d'amorçage, conçu pour déclencher le chargement d'un noyau d'un système d'exploitation du terminal 10a, 10b, ce noyau étant stocké en zone 105.

La deuxième zone 105 de la mémoire 20a est appelée *zone noyau.* Cette zone comprend un fichier F105 unique, signé, comprenant notamment les données et programmes nécessaires pour le démarrage du système d'exploitation du terminal 10a ainsi que pour la lecture et l'exploitation des données stockées dans les zones 110, 120 et 130 de la mémoire. Le fichier F105 comprend:
- le noyau d'un système d'exploitation du terminal 10a;
- un pilote de gestion de données conçu pour construire le système de fichier qui permettra à l'utilisateur d'accéder à des données stockées dans les zones 110, 120 et 130 de la mémoire 20a;
- un pilote de périphérique permettant la saisie d'un mot de passe sur un clavier ou l'entrée d'une donnée biométrique d'authentification d'un l'utilisateur du terminal 10a.

Une signature numérique du fichier F105 est stockée dans la mémoire 20a de manière à permettre la vérification de l'intégrité du fichier F105. Cette signature est stockée dans la zone système 105, par exemple dans une zone d'en-tête de cette zone, de manière à être facilement accessible.

La troisième zone 110 de la mémoire 20a est appelée *zone système.* Cette zone de la mémoire comprend les données et/ou programmes de base complémentaires à ceux de la zone noyau et qui sont utiles pour le fonctionnement et l'utilisation du terminal 10a, 10b. Il s'agit par exemple des éléments suivants: pilotes de périphériques autres que ceux de la zone noyau, programmes de configuration, outils d'administration du système d'exploitation, etc. L'ensemble des données et/ou fichiers de la zone système 110 est stocké sous la forme d'un fichier F110 unique, signé, et de préférence compressé. Une signature numérique de ce fichier F110 est stockée dans la mémoire 20a de manière à permettre la vérification de l'intégrité du fichier F110. Cette signature est stockée dans la zone système 110, par exemple dans une zone d'en-tête de cette zone, de manière à être facilement accessible.

La quatrième zone 120 est appelée *zone delta.* Cette zone de la mémoire comprend des programmes et données complémentaires à ceux de la zone système 110, par exemple des programmes, fichiers ou données de configuration qui sont propres à l'utilisateur et qui correspondent à une mise à jour par ajout de la zone système. Tant qu'aucune mise à jour de la zone système 110 par ajout de programmes ou autres fichiers n'a été effectuée, cette zone mémoire ne comporte aucune donnée mais est néanmoins présente sur le périphérique 20a. L'ensemble des données et/ou fichiers de la zone delta 120 est stocké sous la forme d'un fichier F120 unique, chiffré et de préférence compressé.

La cinquième zone 130 est appelée *zone utilisateur.* Cette zone de la mémoire comprend les fichiers personnels de l'utilisateur: fichiers et/ou données personnelles de configuration, documents de travail, etc. L'ensemble des données et/ou fichiers de la zone utilisateur 130 est stocké sous la forme d'un fichier F130 unique, chiffré et de préférence compressé.

La partie de la mémoire 20a correspondant à la zone de démarrage 100 est à accès en écriture sécurisé. Selon une première alternative, cette memoire est réalisée sous forme de mémoire accessible en lecture seule (ROM, Read Only Memory) de manière à rendre impossible la modification des données qui y sont stockées. Selon une deuxième alternative, l'accès en écriture à cette partie 100 de la mémoire est possible, mais uniquement à condition de disposer d'un code d'accès. Dans cette deuxième alternative, on utilise par exemple une mémoire couplée à une carte à puce, par exemple la mémoire d'une clef USB comprenant une carte à puce.

La partie de la mémoire 20a correspondant aux zones noyau et système 105 et 110 est de préférence une partie à accès en lecture seule.
La partie de la mémoire 20a, correspondant aux zones delta et utilisateur 120 et 130 est réinscriptible, réalisée par exemple sous la forme d'une mémoire de type FLASH. Cette partie de la mémoire est donc accessible en lecture et en écriture. En supplément, comme cela va être décrit ci-dessous, différents mécanismes de signature numérique et de chiffrement des données sont utilisés pour garantir l'intégrité des
données qui y sont stockées.

Dans le cas où une technique de cryptographie asymétrique est utilisée pour la génération des signatures des fichiers F105 et F110, une donnée de vérification de signature numérique, par exemple un certificat ou une clef publique, nécessaire à la vérification de ces signatures, est stockée dans la partie sécurisée de la mémoire 20a c'est-à-dire dans la zone de démarrage 100, de manière à ne pas pouvoir être modifiée par l'utilisateur ou uniquement par une personne non autorisée. Dans cette hypothèse, seule une personne accréditée, possédant la clé privée correspondante, est capable de générer les signatures des fichiers F105 et F110.

La figure 2b illustre un autre mode de réalisation de la mémoire utilisée dans l'invention. Dans ce mode de réalisation, la mémoire 20b est également divisée en cinq zones de données, où les zones 100, 105 et 110 sont identiques aux zones décrites pour la figure 2a. Cependant, dans le mode de réalisation illustré à la figure 2a, la zone delta 120 et la zone utilisateur 130 sont divisées en sous-parties 121 à 123, respectivement 131 à 134, chaque partie comprenant un fichier chiffré F121 à F123, respectivement F131 à F134. En effet, les données et/ou programme de mise à jour de la zone système ainsi que les données et/ou programmes de l'utilisateur peuvent être composés de plusieurs sous-parties, chaque partie étant compressée, chiffrée et stockée sous la forme d'un fichier unique.

En généralisant les modes de réalisation des figures 2a et 2b, la zone delta 120 et la zone utilisateur 130 comprennent chacune un ou plusieurs fichiers de données.

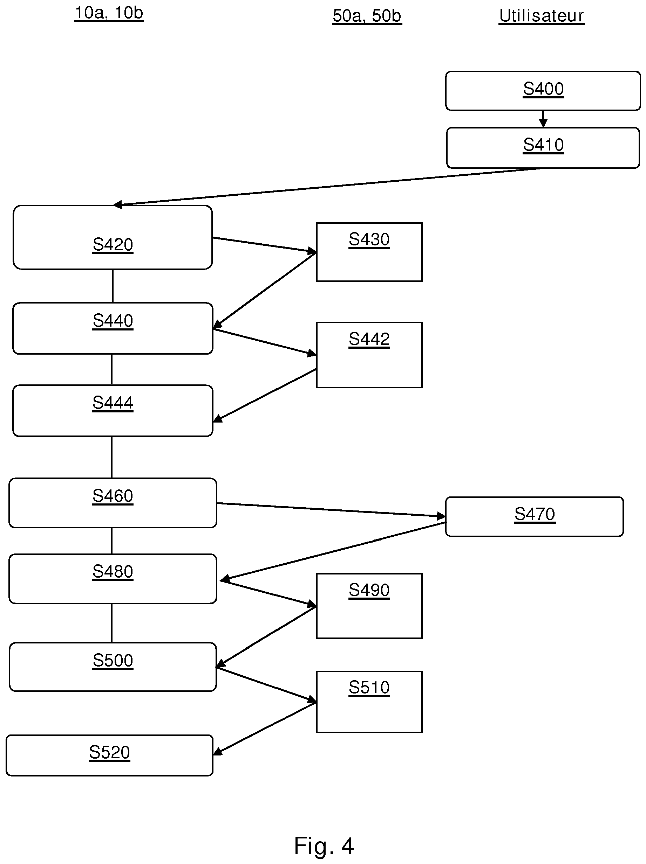

La figure 4 illustre comment le contenu de la mémoire 20a ou 20b est exploité lors du démarrage du terminal hôte, lorsque se déroule le processus de démarrage et
de configuration du terminal 10a ou 10b, en liaison de communication avec un périphérique (clef USB 50a ou terminal 50b) utilisé comme dispositif de stockage.

A l'étape S400, un utilisateur du terminal hôte connecte son périphérique 50a, 50b sur un des ports USB de l'ordinateur hôte.

A l'étape S410, l'utilisateur met sous tension et démarre le terminal 10a, 10b.
A l'étape S420 le programme de base d'entrée/sortie (BIOS) démarre. Ce programme BIOS exécute une procédure de détection des périphériques présents sur le terminal 10a, 10b ou interconnectés à ce terminal. Il recherche, selon un ordre prédéfini dans une liste configurable prédéfinie qui lui est propre, parmi les supports d'enregistrement de données présents, le premier support comprenant un secteur d'amorçage comprenant un programme d'amorçage du système d'exploitation. Traditionnellement, la configuration standard des listes de démarrage indique que les périphériques connectés au bus USB doivent être interrogés avant le disque dur du terminal. Par conséquent, dans l'invention, c'est la zone de démarrage 100 de la mémoire de la clé USB qui est détectée en premier et utilisée prioritairement aux disques durs éventuellement présents dans le terminal 10a, 10b.

A l'étape S430, la mémoire répond à la détection de présence. Le programme BIOS détecte donc la présence d'une mémoire 20a, 20b de stockage sur le périphérique USB 50a, 50b. Le programme BIOS accède en lecture à la mémoire puis déclenche l'exécution d'un programme d'amorçage stocké dans la zone système 110 de la mémoire.

A l'étape S440, le programme d'amorçage s'exécute.

A l'étape S442, le programme d'amorçage accède en lecture à la zone noyau 105 de la mémoire 20a, 20b.

A l'étape S444, ce programme vérifie la signature du fichier F105 qui est stocké dans la zone noyau 105 au moyen d'une clef publique ou d'un certificat, stocké de préférence dans la zone sécurisée de la mémoire, la zone de démarrage 100. Dans le cas où la signature n'est pas valide, le procédé se termine. Si la signature est valide le noyau est chargé en mémoire du terminal 10a, 10b et exécuté.

A l'étape S450, le noyau accède en lecture à la zone système 110 de la mémoire 20a, 20b.

A l'étape S460, le noyau vérifie la signature du fichier F110 qui est stocké dans la zone système 110 au moyen d'une clef publique ou d'un certificat, stocké de préférence dans la zone sécurisée de la mémoire, la zone de démarrage 100. Dans le cas où la signature n'est pas valide, le procédé se termine. Le noyau décompresse ensuite le fichier F110.

Le noyau démarre également le pilote de gestion de données. Ce pilote construit alors en mémoire vive du terminal une structure logique de fichiers, sous forme d'arborescence de répertoires et fichiers, à partir des données du fichier F110 décompressé issu de la zone système 110, afin de rendre accessible en lecture seule les fichiers de cette arborescence par un utilisateur du terminal.

A l'étape S460, le système d'exploitation déclenche l'exécution d'un module logiciel d'authentification conçu pour demander à l'utilisateur de saisir un mot de passe sur le clavier du terminal 10a ou 10b, ou du périphérique 50b.

A l'étape S470, l'utilisateur saisit un mot de passe sur le clavier du terminal 10a,10b ou du périphérique 50a, 50b, mot de passe qui est ensuite analysé par le module d'authentification afin d'authentifier l'utilisateur du terminal 10a, 10b.

Les étapes S460 et S470 peuvent éventuellement faire intervenir une carte à puce et le pilote de périphérique nécessaire au fonctionnement de cette carte à puce.

En cas d'échec de l'authentification (mot de passe erroné), le procédé s'arrête, à moins que l'utilisateur ne soit autorisé à effectuer plusieurs tentatives de saisie. De préférence, en cas d'échec de l'authentification, le démarrage complet du système d'exploitation du terminal 10a, 10b est interrompu, de manière à ce que l'utilisateur non authentifié ne soit pas en mesure d'utiliser ce terminal. En alternative, le système d'exploitation démarre complètement mais les données et/ou fichiers des zones delta et utilisateurs ne sont ni extraites ni accessibles par cet utilisateur, celui-ci étant néanmoins en mesure d'utiliser le terminal 10a, 10b avec un système d'exploitation brut, sans autres données, fichier ou programme.

A l'étape S480, en cas d'authentification réussie, le pilote de gestion de données obtient une clef de déchiffrement des données de la zone delta 120. Cette clef de déchiffrement est obtenue soit par interrogation de la carte à puce conditionnellement à la présentation d'un mot de passe valide, soit par déchiffrement, au moyen du mot de passe fourni, d'une clef de déchiffrement chiffrée stockée dans la zone delta 120.

Le mot de passe fourni par l'utilisateur est également utilisable en tant que clef pour le déchiffrement ou le chiffrement des données des zones delta et utilisateur. Dans le cas d'utilisation des clefs de chiffrement et de déchiffrement stockées dans la carte à puce, le mot de passe saisi n'étant pas utilisé comme clef de déchiffrement, il peut être remplacé par un simple code PIN.

A l'étape S490, suite à une requête d'accès à la zone delta 120 de la mémoire 20a ou 20b, le pilote de gestion de données obtient, s'ils existent, le ou les fichiers F120 à F124 stockés en zone delta 120 puis déchiffre le ou les fichiers de cette zone. Si aucun fichier n'est stocké en zone delta 120, le procédé se poursuit à l'étape S510.

A l'étape S500, le pilote de gestion de données construit en mémoire vive du terminal 10a, 10b une structure logique de fichiers, sous forme d'arborescence des répertoires et fichiers, à partir des données contenues dans le ou les fichiers déchiffrés F120 à F124 de la zone delta 120. Les fichiers de cette arborescence sont ainsi accessibles par un utilisateur dudit terminal à travers cette structure logique. En d'autres termes, cette nouvelle arborescence vient compléter et s'ajouter à celle construite précédemment à partir du fichier F110, pour former une arborescence unique, accessible par l'utilisateur comme une partition de disque dur.

A l'étape S510, suite à une requête d'accès à la zone utilisateur 130 de la mémoire 20a, 20b, le pilote de gestion de données obtient, s'ils existent, le ou les fichiers F130 à F134 stockés en zone utilisateur 130 puis déchiffre le ou les fichiers de cette zone. Si aucun fichier n'est stocké en zone utilisateur 130, le procédé se termine.

A l'étape S520, le pilote de gestion de données construit en mémoire vive du terminal 10a, 10b une structure logique de fichiers, sous forme d'arborescence de répertoires et fichiers, à partir des données contenues dans le ou les fichiers F130 à F134 déchiffrés de la zone utilisateur 130. Les fichiers de cette arborescence sont ainsi accessibles par un utilisateur du terminal 10a, 10b au moyen de la même structure logique, que les données issues du fichier F110 et celles du fichier F120. En d'autres termes, cette troisième arborescence vient compléter et s'ajouter à celle construite précédemment pour former une arborescence unique, accessible par l'utilisateur comme une partition de disque dur.

Lorsque l'utilisateur demande à accéder en écriture, respectivement en lecture à un des fichiers de l'arborescence construite, le pilote de gestion de données se charge de chiffrer, respectivement de déchiffrer, les blocs correspondant de la mémoire 20a, 20b.

Le codage d'une arborescence de fichier répond à une structure bien spécifique et nécessite l'utilisation de paramètres spécifiques prédéterminés. En conséquence, le déchiffrement d'une telle structure logique exécuté avec une clef de déchiffrement erronée rend les données obtenues inutilisables. Pour chacun des fichiers signés F120 à F124 ou F130 à F134, le chiffrement a donc aussi valeur de contrôle d'intégrité et le fichier chiffré a valeur de signature.

En ce qui concerne le chiffrement de données, il est fait usage par exemple de fonctions de cryptographie asymétrique Avantageusement, les fichiers F120 à F124 et F130 à F134 de données stockées dans les zones delta et utilisateur seront chiffrés, respectivement déchiffrés, bloc par bloc. Dans ce cas on utilise, non pas une seule clef, mais plusieurs clefs de déchiffrement et donc autant de clefs de chiffrement. Une règle précise quelle clef est utilisée pour un bloc donné. Par exemple, lorsqu'on est en présence de Z blocs de mémoire à chiffrer ou déchiffrer, la règle définit qu'un bloc x, 0≤x<Z, sera chiffré, respectivement déchiffré, au moyen de la clef KCᵢ de chiffrement, respectivement KDᵢ de déchiffrement, telle que x est congru à i modulo N, où N est le nombre de clef de chiffrement.

Ainsi, lorsque le pilote de gestion de données construit, à partir des zones système, delta ou utilisateur de la mémoire 20a, 20b une arborescence de répertoires et de fichiers, il rend accessible par un utilisateur du terminal les données stockées dans ces zones de façon transparente. Ces zones sont ainsi vues comme un unique périphérique virtuel de stockage. On parle également de partition virtuelle de stockage. L'organisation logique de ce système de fichier, notamment l'arborescence des fichiers stockés dans ces, est visible par l'utilisateur. Suite à une demande d'accès en lecture (respectivement en écriture) à un fichier de données de cette arborescence, le pilote de gestion de données déchiffre (respectivement chiffre) à la volée le ou les blocs de données comprenant ce fichier en utilisant la ou les clefs de déchiffrement (respectivement de chiffrement) correspondantes.

Pour des raisons de sécurité, seuls les fichiers de données stockés dans les zones delta et utilisateur sont modifiables. En ce qui concerne la zone delta, seul un programme spécifique, appelé programme d'installation de mise à jour, présent en zone système, est autorisé à écrire en zone delta. L'utilisateur, lui, ne peut modifier que les fichiers stockés dans la zone utilisateur. En d'autre terme, lorsque l'utilisateur émet une demande d'écriture de données, le pilote de gestion de données vérifie d'abord s'il s'agit d'un fichier de la zone utilisateur. Dans la négative, l'opération d'écriture est refusée. Dans le cas contraire, les données du fichier sont stockées à la volée sur le périphérique 20a, 20b, dans la zone utilisateur.

En d'autre terme, pour chaque fichier accessible à travers l'arborescence logique, le pilote de gestion de données dispose d'une information indiquant dans quelle zone (système, delta ou utilisateur) est stocké physiquement le fichier considéré.).

Avantageusement, aucun processus de permutation de mémoire (ou swap, en terminologie anglo-saxonne) ne sera utilisé. L'absence de permutation garantit que le fichier déchiffré ne sera jamais présent sur un quelconque disque, ni même sur un autre support, ce qui renforce la sécurité du dispositif. De cette manière aucune trace n'est laissée sur le disque dur du terminal 10a, 10b lors de son utilisation ponctuelle et de son démarrage par un utilisateur nomade.

La procédure de démarrage sécurisée qui a été décrite garantit que l'exécution du système d'exploitation se déroule dans un environnement maîtrisé, et donc de confiance. En effet, la zone de démarrage 110 est une zone qui n'est pas modifiable par un utilisateur non autorisé.

Le disque dur du terminal 10a, 10b n'est jamais sollicité, ni aucun autre support d'enregistrement du terminal autre que la mémoire vive et le processeur du terminal 10a, 10b. En outre l'utilisateur n'y laisse pas de données personnelles. De plus, l'utilisateur ne peut pas exécuter les programmes résidents sur le disque dur de la machine, notamment des virus ou des programmes malveillants. De manière générale, seuls les données et programmes présents dans la mémoire de la clef 50a pourront être utilisées ou exécutés.

La présence d'une carte à puce (carte à puce de la clef USB 50a ou carte SIM du terminal 50b) permet de stocker de manière sure des clefs de déchiffrement et/ou de chiffrement beaucoup plus longues qu'un simple mot de passe et donc améliore le niveau de sécurité du dispositif. En outre, la carte à puce améliore beaucoup l'ergonomie du dispositif en limitant la saisie par l'utilisateur à un code d'identification court (en général 4 chiffres), avant autorisation d'accès aux données privées de la carte. Enfin, une carte à puce se bloque au bout de trois essais infructueux de saisie de code, ce qui permet d'empêcher les attaques par essais exhaustifs.

Par ailleurs, la carte à puce peut également être utilisée pour effectuer le déchiffrement des données des zones delta et utilisateur, en lieu et place du pilote de gestion de données.

En alternative à l'utilisation d'un mot de passe ou d'un code PIN (Personal Identification Number), des techniques de biométrie sont également utilisables, dès lors que le dispositif intègre un capteur biométrique approprié. Dans une telle alternative, l'utilisateur, au lieu de saisir son code PIN ou son mot de passe, est amené à appliquer son pouce à l'emplacement prévu, par exemple sur la clef USB. En généralisant, toute donnée d'authentification de l'utilisateur peut être utilisée en lieu et place d'un simple mot de passe.

La zone delta 120 étant chiffrée, les données qu'elles contient sont accessibles uniquement suite à la fourniture d'un mot de passe valide, un pirate informatique ayant pris possession de la clé USB, sans avoir connaissance du mot de passe associé et alors que le terminal n'a pas encore démarré, ne peut ni modifier la zone système 110 car la signature de celle-ci est vérifiée lors du démarrage, ni injecter des fichiers dans la zone delta 120 ou utilisateur car un mot de passe erroné ne permet pas de déchiffrer correctement les données de cette zone. Le mécanisme de chiffrement utilisé permet donc de garantir l'intégrité de ces données.

Dans le mode de réalisation de la figure 1b, la zone de démarrage 100 est incluse dans la carte SIM du modem radio du terminal 50b. La zone de démarrage 100 est donc accessible en lecture seule à partir du bus USB du terminal 10b lorsque le terminal 50b est relié par câble USB au terminal 10b. Cependant, dans ce mode de réalisation, la zone de démarrage 100 est accessible également en écriture pour l'opérateur mobile du réseau de télécommunication auquel accède le terminal 50b, par exemple par l'envoi d'un message court spécifique (Short Message Service ou SMS). Cette technique d'accès en écriture aux données d'une carte SIM par un opérateur est plus connue sous la dénomination anglaise "Over The Air" ou OTA.

Ce mode de réalisation empêche toute fraude ou attaque sur le terminal 50b tout en permettant à l'opérateur de mettre à jour la zone de démarrage 100 par un canal de confiance via le réseau de télécommunication. La mise à jour de la zone de démarrage 100 peut porter sur l'ensemble de la zone ou uniquement sur les clés de vérification de signature.

Un processus de mise à jour des données de la clef USB est maintenant décrit au regard de la figure 3. Ce processus est utilisable lorsque le terminal 10a ou 10b a été configuré lors de son démarrage à l'étape S300 par le procédé de configuration sécurisée selon l'invention.

Dans un premier mode de réalisation, le terminal 10a, 10b dispose d'un module de communication pour l'accès à un réseau de communication. La zone système 110 comprend un pilote de module de communication adapté pour le pilotage du module de communication, ce pilote étant démarré par le système d'exploitation suite à la détection sur le terminal du module de communication.

Dans un deuxième mode de réalisation, lorsque le terminal 10b ne dispose pas d'un tel module de communication, le processus utilise le module de communication d'un terminal externe, par exemple le terminal de télécommunication 50b, relié au terminal 10b par une liaison de communication filaire ou non filaire établie sur un des ports de communication du terminal 10b. Dans ce cas, le fichier F110 de la zone système 110 comprend un pilote adapté pour le pilotage du module de communication à travers ladite liaison, ce pilote étant automatiquement démarré au cours par le système d'exploitation par exemple lorsque celui-ci détecte la présence du module sur un des ports de communication. Un mode de réalisation d'un tel pilotage est décrit par exemple dans le document de brevet publié sous le numéro WO2005/036822.

Dans un troisième mode de réalisation, un support de stockage de données est connecté au terminal 10a, 10b à travers un port de communication de ce terminal.

Dans le premier mode ou le deuxième mode de réalisation, une liaison de communication est établie à l'étape S310 au moyen d'un module de communication entre le terminal 10a, 10b et un serveur distant à travers un réseau de communication. Un ou plusieurs fichiers F125, F126, etc, de données, chiffrés et signés numériquement, et de préférence compressés, sont ensuite téléchargés à partir de ce serveur. Ces fichiers F125, F126 sont par exemple des fichiers au format "rpm" (format disponible sous le système d'exploitation Linux).

Dans le troisième mode de réalisation, le ou les fichiers F125, F126 de mise à jour de la zone delta 120 sont obtenus à l'étape S310 par simple lecture du support de stockage de données connecté au terminal 10a, 10b.

Suite à la réception d'un tel fichier de données F125, F126, le pilote de gestion de données, démarré par le noyau du système d'exploitation, vérifie à l'étape S320 la signature de ce fichier par exemple à l'aide d'une clé publique stockée dans la zone système 110. En cas de signature non valide, le fichier n'est pas pris en compte et la procédure de mise à jour se termine.

A l'étape S330, en cas de signature valide, le programme d'installation de mise à jour, présent dans la zone système, procède à l'installation des données et/ou programmes contenus dans ce fichier F125, F126 en zone delta. L'arborescence de répertoires et/ou fichiers construite en mémoire vive du terminal 10a, 10b est ainsi complétée avec les données issues de l'installation du fichier F125, F126.

A l'étape S350, la configuration du terminal est à jour et l'utilisateur du terminal peut exécuter toutes les opérations usuelles sur l'arborescence obtenue..

Tous les ajouts de programmes et/ou données associées sont ainsi effectués via la zone delta 120.

Le dispositif selon l'invention présente ainsi à l'utilisateur une vue unifiée des zones système et delta: concrètement ces zones contiennent chacune la description d'une arborescence de fichiers ainsi que les fichiers correspondant. Au final, c'est une arborescence unique résultant de la superposition de ces arborescences qui est présentée à l'utilisateur.

Lorsque la mise à jour s'effectue à travers le module de communication d'un terminal 50b de télécommunication externe, la mise à jour de la clef USB utilisée comme support de stockage peut aisément être contrôlée par l'opérateur du réseau de télécommunication auquel accède le terminal 50b.

La mise à jour de la clef USB se fait par installation de fichiers, vus chacun comme un paquet unique de données, dans la zone delta 120. Comme cette opération est effectuée par le système d'exploitation qui est garanti sûr grâce à la mise en oeuvre d'un processus de démarrage protégé et à la vérification de la signature de la zone système 110, la zone delta 120 reste sûre. En effet, par un mécanisme de contrôle d'accès sur l'arborescence du système de fichiers, on s'assure que seul le programme d'installation de mise à jour a le droit d'écrire dans la zone delta 120. L'utilisateur de la clé USB n'a pas les privilèges nécessaires pour écrire un fichier arbitraire en dehors de sa zone utilisateur 130.

Lorsque l'utilisateur demande à arrêter le terminal 10a, 10b, toutes les modifications non encore enregistrées sont écrites à la volée, dans les zones delta et utilisateur de manière à ce que les modifications effectuées par l'utilisateur soient disponibles au prochain démarrage du terminal 10a, 10b.

Dans le processus de mise à jour, la zone système 110 n'est jamais altérée. Cette partie correspond donc de préférence uniquement aux données et programme de base nécessaire au fonctionnement du terminal (noyau du système d'exploitation et éléments de base associés). Les données issues de la zone delta 120 sont compatibles avec ces données de base. La plupart du temps, un changement du noyau du système d'exploitation contenu dans la zone système 110 aura des répercutions sur les données de la zone delta 120. On comprend donc que la solution proposée ici permet une mise à jour simplifiée, par ajout, et non une mise à jour complète. Seule une quantité relativement minime de donnée est donc à transmettre via le réseau en vue de cette mise à jour, comparativement aux centaines de mégaoctets nécessaires pour une remise à jour complète des zones système et delta.

En outre, de par le processus d'installation qui n'accepte de traiter que des fichiers signés, l'opérateur du réseau de télécommunication peut gérer et contrôler les mises à jour que les utilisateurs effectuent, n'autorisant par exemple que l'installation de fichiers ou programmes prédéfinis. Ceci garanti que la zone système 110, en tenant compte des modifications stockées dans la zone delta 120, ne contient que des logiciels validés par l'opérateur.

En alternative à l'utilisation d'une clef USB, notamment dans le cas d'un ordinateur personnel 10a, 10b relativement ancien qui ne peut pas démarrer sur le port USB, il est possible d'utiliser un CD-ROM pour la première phase de configuration et de démarrage du système d'exploitation (étape de chargement des données des zones 100, 105 voire 110, puis, une fois le système d'exploitation démarré et les périphériques USB accessibles, de rechercher les données utilisateur sur un autre support de stockage.

De manière générale, pour augmenter la capacité de stockage, deux supports de stockage différents peuvent être utilisés: l'un (par exemple la clef USB 50a) pour la zone de démarrage 100, la zone noyau 105, voire la zone système 110, l'autre (par exemple la mémoire de la clef USB 50a ou celle du terminal périphérique 50b) pour les autres zones, notamment la zone delta 120 et la zone utilisateur 130. Au moins une partie des moyens de stockage de données est interrogée par un système de base d'entrée/sortie lors d'une phase de recherche d'un programme d'amorçage d'un système d'exploitation du terminal 10a, 10b. En l'occurrence, dans l'exemple donné, c'est le premier des deux supports, accessible par le BIOS et détecté comme faisant partie de la liste des supports, que le BIOS analyse pour y détecter la présence d'un programme d'amorçage. Ce premier support n'a besoin que d'être accessible en lecture seule. Le deuxième des deux supports est lui accessible en lecture et écriture à partir du terminal 10a ou 10b, au moyen d'un pilote de gestion de périphérique de stockage et au travers d'une liaison de communication entre le terminal 10a, 10b et ce support d'enregistrement.

Le processus de configuration du terminal 10a, 10b selon l'invention est entièrement automatisé. Les seuls moments où l'utilisateur intervient sont lors de la saisie de mot de passe, ou optionnellement, pour le lancement d'un programme de connexion au serveur de chargement de mise à jour. Grâce à l'invention, il devient donc extrêmement simple pour un utilisateur nomade de configurer un ordinateur personnel quelconque et mettre à jour cette configuration, ou plus simplement, afin de travailler dans un environnement logiciel prédéfini et avec des données qui lui sont propres. L'intégrité de l'environnement logiciel et des données de l'utilisateur est garantie. Du point de vue de l'opérateur, un contrôle des programmes installés sur le terminal est possible de manière simple et efficace.

## Revendications

1. Procédé de configuration d'un terminal (10a, 10b) au moyen d'un dispositif externe audit terminal, (50a, 50b), apte à communiquer avec ledit terminal et comprenant des moyens de stockage de données (20a, 20b), l'initialisation dudit terminal déclenchant au moins:
- une étape (S440) d'exécution d'un programme d'amorçage d'un système d'exploitation dudit terminal, ledit programme d'amorçage étant stocké dans une première zone mémoire (100) desdits moyens de stockage, ladite première zone mémoire (100) étant à accès en écriture sécurisé,
- une étape (S444) de démarrage d'un noyau d'un système d'exploitation à partir d'un premier fichier, stocké dans une deuxième zone mémoire (105) desdits moyens de stockage, ladite étape de démarrage étant destinée à n'être déclenchée qu'en cas de validité d'une signature numérique dudit premier fichier,
le procédé étant **caractérisé en ce qu'**il comprend une étape (S500) de construction en mémoire vive dudit terminal d'une première structure logique de fichiers à partir d'un deuxième fichier (F120), chiffré numériquement et stocké dans une troisième zone mémoire (120) desdits moyens de stockage, dans laquelle un utilisateur est susceptible de naviguer comme s'il s'agissait d'une partition d'un disque dur.

2. Procédé de configuration selon la revendication 1 dans lequel l'initialisation dudit terminal déclenche en outre,
- une étape (S460) de construction en mémoire vive dudit terminal d'une deuxième structure logique de fichiers à partir de données contenues dans un troisième fichier (F110) stocké dans une quatrième zone mémoire (110) desdits moyens de stockage, ladite étape de construction étant destinée à n'être déclenchée qu'en cas de validité d'une signature numérique dudit deuxième fichier.

3. Procédé de configuration selon l'une des revendications 1 ou 2, dans lequel une étape de vérification de la signature numérique du premier fichier est exécutée au moyen d'une donnée de vérification de signature numérique stockée dans une zone mémoire desdits moyens de stockage dont l'accès en écriture est sécurisé.

4. Procédé de configuration selon l'une quelconque des revendications 1 à 3 dans lequel l'initialisation dudit terminal déclenche en outre:
- une étape d'obtention (S310) d'au moins un quatrième fichier de données, ledit quatrième fichier étant chiffré numériquement,
- une étape de construction (S330) en mémoire vive dudit terminal d'une troisième structure logique de fichiers à partir de données contenues dans ledit au moins un quatrième fichier.

5. Procédé de configuration selon la revendication 1 ou 4 dans lequel au moins une des étapes de construction est exécutée conditionnellement à la fourniture (S470) d'une donnée valide d'authentification d'un utilisateur.

6. Procédé de configuration selon la revendication 4 dans lequel le quatrième fichier est obtenu par lecture d'une cinquième zone mémoire (120, 130) desdits moyens de stockage.

7. Procédé de configuration selon la revendication 4 dans lequel le quatrième fichier est obtenu par téléchargement à partir d'un serveur de données en liaison de communication avec ledit terminal.

8. Procédé de configuration selon l'une des revendications 1 à 7, dans lequel l'initialisation dudit terminal déclenche en outre une étape de déchiffrement d'au moins un bloc de données dudit deuxième respectivement quatrième fichier, ladite étape de déchiffrement étant exécutée suite à une demande d'accès en lecture à un fichier de ladite première respectivement troisième structure logique, la clef de déchiffrement utilisée dans l'étape de déchiffrement étant obtenue conditionnellement à la fourniture d'une donnée valide d'authentification d'un utilisateur.

9. Dispositif de configuration d'un terminal (10a, 10b), le dispositif étant externe audit terminal, apte à communiquer avec ledit terminal et comprenant des moyens de stockage de données (20a, 20b), lesdits moyens de stockage comprenant :
- une première zone mémoire (100), à accès en écriture sécurisé, comprenant un programme d'amorçage d'un système d'exploitation dudit terminal,
- une deuxième zone mémoire (105) comprenant un premier fichier signé numériquement, ledit premier fichier comprenant un noyau d'un système d'exploitation dudit terminal,
une initialisation dudit terminal déclenchant,
- une étape (S440) d'exécution dudit programme d'amorçage,
- une étape (S444) de démarrage dudit noyau, ladite étape de démarrage étant destinée à n'être déclenchée qu'en cas de validité d'une signature numérique dudit premier fichier.
le dispositif étant **caractérisé en ce que** les moyens de stockage comprennent une troisième zone mémoire (120) comprenant au moins un deuxième fichier chiffré numériquement, l'initialisation dudit terminal déclenchant en outre
- une étape (S500) de construction en mémoire vive dudit terminal d'une première structure logique de fichiers à partir dudit deuxième fichier, dans laquelle un utilisateur est susceptible de naviguer comme s'il s'agissait d'une partition d'un disque dur.

10. Dispositif selon la revendication 9, sous forme de clé USB.

## Patentansprüche

1. Verfahren zur Konfiguration eines Endgeräts (10a, 10b) mittels einer bezüglich des Endgeräts externen Vorrichtung (50a, 50b), die geeignet ist, mit dem Endgerät zu kommunizieren, und Datenspeichermittel (20a, 20b) umfasst, wobei die Initialisierung des Endgeräts wenigstens auslöst:
- einen Schritt (S440) der Ausführung eines Bootloaders eines Betriebssystems des Endgeräts, wobei der Bootloader in einem ersten Speicherbereich (100) der Speichermittel gespeichert ist, wobei der erste Speicherbereich (100) ein Bereich mit sicherem Schreibzugriff ist,
- einen Schritt (S444) des Startens eines Kerns eines Betriebssystems aus einer ersten Datei, die in einem zweiten Speicherbereich (105) der Speichermittel gespeichert ist, wobei der Schritt des Startens dazu bestimmt ist, nur im Falle der Gültigkeit einer digitalen Signatur der ersten Datei ausgelöst zu werden,
wobei das Verfahren **dadurch gekennzeichnet ist, dass** es einen Schritt (S500) des Aufbaus, im Arbeitsspeicher des Endgeräts, einer ersten logischen Dateistruktur aus einer zweiten Datei (F120), die digital verschlüsselt und in einem dritten Speicherbereich (120) der Speichermittel gespeichert ist, umfasst, in welcher ein Benutzer navigieren kann, als wenn es sich um eine Partition einer Festplatte handeln würde.

2. Verfahren zur Konfiguration nach Anspruch 1, wobei die Initialisierung des Endgeräts außerdem auslöst:
- einen Schritt (S460) des Aufbaus, im Arbeitsspeicher des Endgeräts, einer zweiten logischen Dateistruktur aus Daten, die in einer dritten Datei (F110) enthalten sind, die in einem vierten Speicherbereich (110) der Speichermittel gespeichert ist, wobei der Schritt des Aufbaus dazu bestimmt ist, nur im Falle der Gültigkeit einer digitalen Signatur der zweiten Datei ausgelöst zu werden.

3. Verfahren zur Konfiguration nach einem der Ansprüche 1 oder 2, wobei ein Schritt der Überprüfung der digitalem Signatur der ersten Datei mittels eines Datenelements zur Überprüfung der digitalem Signatur ausgeführt wird, das in einem Speicherbereich der Speichermittel gespeichert ist, der einen sicheren Schreibzugriff aufweist.

4. Verfahren zur Konfiguration nach einem der Ansprüche 1 bis 3, wobei die Initialisierung des Endgeräts außerdem auslöst:
- einen Schritt der Gewinnung (S310) wenigstens einer vierten Datendatei, wobei die vierte Datei digital verschlüsselt ist,
- einen Schritt (S330) des Aufbaus, im Arbeitsspeicher des Endgeräts, einer dritten logischen Dateistruktur aus Daten, die in der wenigstens einer vierten Datei enthalten sind.

5. Verfahren zur Konfiguration nach Anspruch 1 oder 4, wobei wenigstens einer der Schritte des Aufbaus unter der Bedingung ausgeführt wird, dass die Lieferung (S470) eines gültigen Datenelements zur Authentifizierung eines Benutzers erfolgt ist.

6. Verfahren zur Konfiguration nach Anspruch 4, wobei die vierte Datei durch Lesen eines fünften Speicherbereichs (120, 130) der Speichermittel gewonnen wird.

7. Verfahren zur Konfiguration nach Anspruch 4, wobei die vierte Datei durch Herunterladen von einem Datenserver gewonnen wird, der mit dem Endgerät in Kommunikationsverbindung steht.

8. Verfahren zur Konfiguration nach einem der Ansprüche 1 bis 7, wobei die Initialisierung des Endgeräts außerdem einen Schritt der Entschlüsselung wenigstens eines Datenblocks der zweiten bzw. vierten Datei auslöst, wobei dieser Schritt der Entschlüsselung nach einer Anforderung des Lesezugriffs auf eine Datei der ersten bzw. dritten logischen Struktur ausgeführt wird, wobei der im Schritt der Entschlüsselung verwendete Entschlüsselungsschlüssel unter der Bedingung gewonnen wird, dass die Lieferung eines gültigen Datenelements zur Authentifizierung eines Benutzers erfolgt ist.

9. Vorrichtung zur Konfiguration eines Endgeräts (10a, 10b), wobei die Vorrichtung bezüglich des Endgeräts extern ist, geeignet ist, mit dem Endgerät zu kommunizieren, und Datenspeichermittel (20a, 20b) umfasst, wobei die Speichermittel umfassen:
- einen ersten Speicherbereich (100) mit sicherem Schreibzugriff, der einen Bootloader eines Betriebssystems des Endgeräts umfasst,
- einen zweiten Speicherbereich (105), der eine digital signierte erste Datei umfasst, wobei die erste Datei einen Kern eines Betriebssystems des Endgeräts umfasst,
wobei eine Initialisierung des Endgeräts auslöst:
- einen Schritt (S440) der Ausführung des Bootloaders,
- einen Schritt (S444) des Startens des Kerns, wobei der Schritt des Startens dazu bestimmt ist, nur im Falle der Gültigkeit einer digitalen Signatur der ersten Datei ausgelöst zu werden,
wobei die Vorrichtung **dadurch gekennzeichnet ist, dass** die Speichermittel einen dritten Speicherbereich (120) umfassen, der wenigstens eine digital verschlüsselte zweite Datei umfasst, wobei die Initialisierung des Endgeräts außerdem auslöst:
- einen Schritt (S500) des Aufbaus, im Arbeitsspeicher des Endgeräts, einer ersten logischen Dateistruktur aus der zweiten Datei, in welcher ein Benutzer navigieren kann, als wenn es sich um eine Partition einer Festplatte handeln würde.

10. Vorrichtung nach Anspruch 9 in der Form eines USB-Sticks.

## Claims

1. Method of configuring a terminal (10a, 10b) by means of a device external to said terminal (50a, 50b) able to communicate with said terminal and comprising data storage means (20a, 20b), the initialization of said terminal triggering at least:
- a step (S440) for running a boot program of an operating system of said terminal, said boot program being stored in a first memory area (100) of said storage means, said first memory area (100) featuring secure write-mode access,
- a step (S444) for starting up a kernel of an operating system from a first file, stored in a second memory area (105) of said storage means, said startup step being intended to be triggered only if a digital signature of said first file is valid,
said method being **characterized in that** it comprises :
- a step (S500) for constructing, in RAM memory of said terminal, a first logical file structure from a second file (F120), digitally encrypted and stored in a third memory area (120) of said storage means in which a user could navigate as if it was a partition of a hard disk.

2. Configuration method according to Claim 1, in which the initialization of said terminal also triggers,
- a step (S460) for constructing, in RAM memory of said terminal, a second logical file structure from data contained in a third file (F110) stored in a fourth memory area (110) of said storage means, said construction step being intended to be triggered only if a digital signature of said second file is valid.

3. Configuration method according to either of Claims 1 and 2, in which a step for verifying the digital signature of the first file is executed by means of a digital signature verification datum contained in a memory area of said storage means whose write-mode access is secure.

4. Configuration method according to any one of Claims 1 to 3, in which the initialization of said terminal also triggers,
- a step (S310) for obtaining at least one fourth data file, said fourth file being digitally encrypted,
- a step (S330) for constructing, in RAM memory of said terminal, a third logical file structure from data contained in said at least one fourth file.

5. Configuration method according to Claim 1 or 4, in which at least one of the construction steps is executed conditionally on the provision (S470) of a valid datum of authentication of a user.

6. Configuration method according to Claim 4, in which the fourth file is obtained by reading a fifth memory area (120, 130) of said storage means.

7. Configuration method according to Claim 4, in which the fourth file is obtained by downloading from a data server having a communication link with said terminal.

8. Configuration method according to one of Claims 1 to 7, in which the initialization of said terminal also triggers a step for decrypting at least one data block of said second respectively fourth file, said decryption step being executed following a request for read-mode access to a file of said first respectively third logical structure, the decryption key used in the decryption step being obtained conditionally on the provision of a valid datum of authentication of a user.

9. Device for configuring a terminal (10a, 10b), the device being external to said terminal, able to communicate with said terminal and comprising data storage means (20a, 20b), said storage means comprising:
- a first memory area (100), with secure write-mode access, comprising a boot program for an operating system of said terminal,
- a second memory area (105) comprising a first digitally-signed file, said first file comprising a kernel of an operating system of said terminal,
an initialization of said terminal triggering,
- a step (S440) for executing said boot program,
- a step (S444) for starting up said kernel, said startup step being intended to be triggered only if a digital signature of said first file is valid,
the device being **characterized in that** storage means comprise a third memory area (120) comprising at least a second file, digitally encrypted, the initialization of said terminal also triggering
- a step (S500) for constructing, in RAM memory of said terminal, a first logical file structure from said second file, in which a user could navigate as if it was a partition of a hard disk.

10. Device according to Claim 9, in the form of a USB key.
